# EUROPEAN PATENT APPLICATION

(11) **EP 4 597 959 A1**
(43) Date of publication of application: **06.08.2025**
(21) Application number: 22960429.3
(22) Date of filing: 30.09.2022
(51) Int. Cl.: H04L 27/00

(54) **METHOD AND DEVICE FOR ACTIVATING OR DEACTIVATING UPLINK POSITIONING REFERENCE SIGNAL, STORAGE MEDIUM, AND CORE NETWORK SYSTEM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/123610
(87) International publication number: WO 2024/065821

(57) **Abstract**

The present disclosure relates to a method and device for activating or deactivating an uplink positioning reference signal, a storage medium, and a core network system. The method can be applied to a user equipment, and the method comprises: sending, to a base station, an activation or deactivation request of an uplink positioning reference signal, the activation or deactivation request being used for requesting the base station to activate or deactivate the uplink positioning reference signal, thereby reducing power consumption of the user equipment.

## Description

### TECHNICAL FIELD

The present disclosure relates to the field of communication technologies, and in particular, to a method for activating or deactivating an uplink positioning reference signal, an apparatus, a storage medium, and a core network system.

### BACKGROUND

In the related art, with respect to activating or deactivating the uplink positioning reference signal, it is currently that the location management function (LMF) actively requests the base station to activate or deactivate the uplink positioning reference signal, and the base station sends an activation indication or a deactivation indication to the user equipment after receiving the request from the LMF, so that the user equipment sends or stops sending the uplink positioning reference signal. This manner of activating or deactivating the uplink positioning reference signal cannot satisfy the requirement of low power consumption in the low power high accuracy (LPHA) positioning technology. That is, the manner of activating or deactivating the uplink positioning reference signal has the problem of high power consumption of the user equipment.

### SUMMARY

In order to overcome the problems existing in the related art, the present disclosure provides a method for activating or deactivating an uplink positioning reference signal, an apparatus, a storage medium, and a core network system.

According to a first aspect of the embodiments of the present disclosure, there is provided a method for activating or deactivating an uplink positioning reference signal, the method is applied to a base station, and the method includes:
sending an activation request or a deactivation request for an uplink positioning reference signal to a base station, where the activation request or the deactivation request is used to request the base station to activate or deactivate the uplink positioning reference signal.

According to a second aspect of the embodiments of the present disclosure, there is provided a method for activating or deactivating an uplink positioning reference signal, the method is applied to a base station, and the method includes:
receiving an activation request or a deactivation request for an uplink positioning reference signal sent by user equipment, where the activation request or the deactivation request is used to request the base station to activate or deactivate the uplink positioning reference signal.

According to a third aspect of the embodiments of the present disclosure, there is provided a method for activating or deactivating an uplink positioning reference signal, the method is applied to an LMF, and the method includes:
receiving attribute indication information of an uplink positioning reference signal sent by a base station, where the attribute indication information includes an activation state or a deactivation state of the uplink positioning reference signal, and the activation state or the deactivation state is determined by the base station according to an activation request or a deactivation request sent by user equipment.

According to a fourth aspect of the embodiments of the present disclosure, there is provided an apparatus for activating or deactivating an uplink positioning reference signal, the apparatus is applied in user equipment, and the apparatus includes:
a first sending module, configured to send an activation request or a deactivation request for an uplink positioning reference signal to a base station, where the activation request or the deactivation request is used to request the base station to activate or deactivate the uplink positioning reference signal.

According to a fifth aspect of the embodiments of the present disclosure, there is provided an apparatus for activating or deactivating an uplink positioning reference signal, the apparatus is applied in a base station, and the apparatus includes:
a first receiving module, configured to receive an activation request or a deactivation request for an uplink positioning reference signal sent by user equipment, where the activation request or the deactivation request is used to request the base station to activate or deactivate the uplink positioning reference signal.

According to a sixth aspect of the embodiments of the present disclosure, there is provided an apparatus for activating or deactivating an uplink positioning reference signal, the apparatus is applied in an LMF, and the apparatus includes:
a second receiving module, configured to receive attribute indication information of an uplink positioning reference signal sent by a base station, where the attribute indication information includes an activation state or a deactivation state of the uplink positioning reference signal, and the activation state or the deactivation state is determined by the base station according to an activation request or a deactivation request sent by user equipment.

According to a seventh aspect of the embodiments of the present disclosure, there is provided an apparatus for activating or deactivating an uplink positioning reference signal is provided, including:
a processor; and
a memory, configured to store an instruction executable by the processor;
where the processor is configured to perform the steps of the method in the first aspect, or perform the steps of the method in the second aspect, or perform the steps of the method in the third aspect.

According to an eighth aspect of the embodiments of the present disclosure, there is provided a computer-readable storage medium, where a computer program instruction is stored on the computer-readable storage medium; when the computer program instruction is executed by a processor, the steps of the method in the first aspect are implemented, or the steps of the method in the second aspect are implemented, or the steps of the method in the third aspect are implemented.

According to a ninth aspect of the embodiments of the present disclosure, there is provided a core network system configured to perform the steps of the method in the third aspect.

According to a tenth aspect of the embodiments of the present disclosure, there is provided a core network system, the core network system includes an LMF, and the LMF is configured to perform the method in the third aspect.

According to the foregoing solution, for the user equipment in the radio resource control (RRC) idle state, the user equipment actively sends an activation request or a deactivation request for the uplink positioning reference signal to the base station according to its own requirements, to request the base station to activate or deactivate the uplink positioning reference signal, thus avoiding the situation that the power consumption of the user equipment is increased due to the fact that the user equipment sends the uplink positioning reference signal all the time when the base station does not send the deactivation command to the user equipment, and meanwhile, further avoiding the situation that the power consumption of the user equipment is increased due to signaling transmission in the procedure that the user equipment is required to switch from the RRC idle state to the RRC connected state when the base station sends the activation command or the deactivation command to the user equipment, so that the power consumption of the user equipment is reduced.

### BRIEF DESCRIPTION OF THE DRAWINGS

The accompanying drawings here, which are incorporated in and constitute a part of the description, illustrate embodiments consistent with the present disclosure, and together with the description, serve to explain the principles of the present disclosure.
FIG. 1 is a schematic diagram of a communication system shown according to an example embodiment.
FIG. 2 is a flowchart of a method for activating or deactivating an uplink positioning reference signal shown according to an example embodiment.
FIG. 3 is a flowchart of a method for activating an uplink positioning reference signal shown according to an example embodiment.
FIG. 4 is a flowchart of a method for deactivating an uplink positioning reference signal shown according to an example embodiment.
FIG. 5 is a flowchart of a method for activating or deactivating an uplink positioning reference signal shown according to an example embodiment.
FIG. 6 is a flowchart of a method for activating an uplink positioning reference signal shown according to an example embodiment.
FIG. 7 is a flowchart of a method for deactivating an uplink positioning reference signal shown according to an example embodiment.
FIG. 8 is a flowchart of a method for activating an uplink positioning reference signal shown according to an example embodiment.
FIG. 9 is a flowchart of a method for activating or deactivating an uplink positioning reference signal shown according to an example embodiment.
FIG. 10 is a flowchart of a method for activating or deactivating an uplink positioning reference signal shown according to an example embodiment.
FIG. 11 is a flowchart of a method for activating an uplink positioning reference signal shown according to an example embodiment.
FIG. 12 is a flowchart of a method for deactivating an uplink positioning reference signal shown according to an example embodiment.
FIG. 13 is a flowchart of a method for activating or deactivating an uplink positioning reference signal shown according to an example embodiment.
FIG. 14 is a flowchart of a method for activating or deactivating an uplink positioning reference signal shown according to an example embodiment.
FIG. 15 is a flowchart of a method for activating or deactivating an uplink positioning reference signal shown according to an example embodiment.
FIG. 16 is a flowchart of activating an uplink positioning reference signal shown according to an example embodiment.
FIG. 17 is a flowchart of deactivating an uplink positioning reference signal shown according to an example embodiment.
FIG. 18 is a block diagram of an apparatus for activating or deactivating shown according to an example embodiment.
FIG. 19 is a block diagram of an apparatus for activating or deactivating shown according to an example embodiment.
FIG. 20 is a block diagram of an apparatus for activating or deactivating shown according to an example embodiment.
FIG. 21 is a block diagram of an apparatus for activating or deactivating shown according to an example embodiment.
FIG. 22 is a block diagram of an apparatus for activating or deactivating shown according to an example embodiment.

### DETAILED DESCRIPTION

Example embodiments will be described in detail here, examples of which are illustrated in the accompanying drawings. The following description refers to the accompanying drawings in which the same numerals in different drawings represent the same or similar elements unless otherwise represented. The implementations described in the following example embodiments do not represent all implementations consistent with the present disclosure. By contrast, they are merely examples of apparatuses and methods consistent with some aspects of the present disclosure as detailed in the appended claims.

In the related art, with respect to uplink positioning of user equipment (UE), the UE needs to send an uplink positioning reference signal. Among them, for the aperiodic uplink positioning reference signal and the semi-persistent uplink positioning reference signal, the base station needs to activate or deactivate the uplink positioning reference signal. After receiving the activation command sent by the base station, the UE starts to send an uplink positioning reference signal. After receiving the deactivation command sent by the base station, the UE stops sending the uplink positioning reference signal. At present, the manner of activating or deactivating the uplink positioning reference signal may be as follows. After receiving an activation indication or a deactivation indication of an uplink positioning reference signal sent by a location management function (LMF), the base station sends an activation command or a deactivation command to the UE, activating or deactivating the semi-persistent uplink positioning reference signal by using an MAC Control Element (MAC CE), or activating or deactivating the aperiodic uplink positioning reference signal by using the downlink control information (DCI). This manner of activating or deactivating the uplink positioning reference signal may cause a problem of high power consumption of the user equipment.

For example, in R17, positioning of the UE in the RRC idle state is introduced. For the UE in the RRC idle state, when the uplink positioning reference signal is deactivated, if no small data transfer (SDT) is being performed, the base station cannot send the deactivation command to the UE by using the SDT, resulting in that the UE sends the uplink positioning reference signal all the time, thus increasing the power consumption of the UE. If the base station sends the deactivation command to the UE, the base station needs to first instruct the UE to enter the RRC connected state from the RRC idle state and then send a deactivation command to the UE; and, generation of signaling is present when the UE enters the RRC connected state from the RRC idle state, thus increasing the power consumption of the UE. When the uplink positioning reference signal is activated, if no SDT is being performed, and the base station wants to send an activation command, the UE is also required to enter the RRC connected state from the RRC idle state, and then the base station sends an activation command to the UE, which also increases the power consumption of the UE.

In view of this, according to embodiments of the present disclosure, there is provided a method for activating or deactivating an uplink positioning reference signal, an apparatus and a storage medium. The present disclosure is explained below with reference to the accompanying drawings.

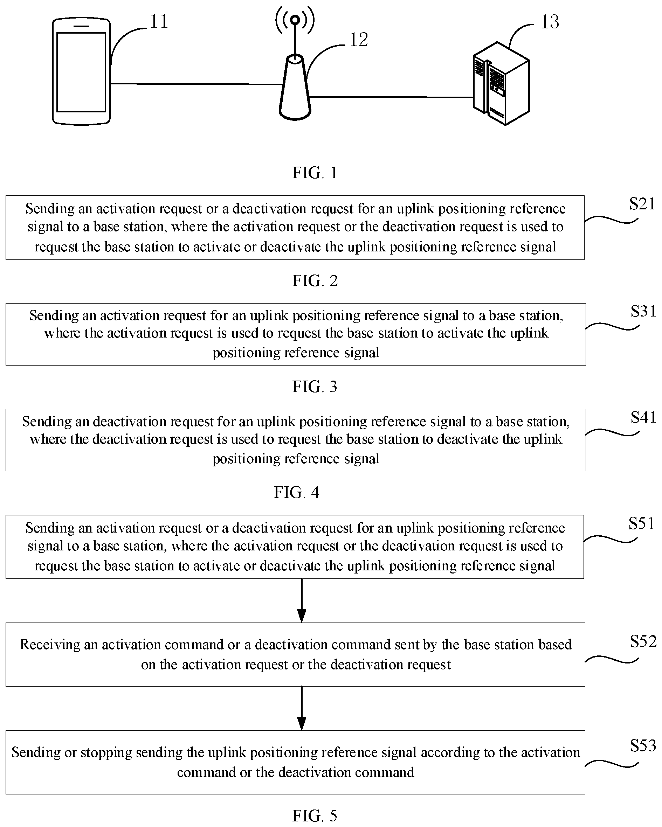

FIG. 1 is a schematic diagram of a communication system shown according to an example embodiment. Referring to FIG. 1, the communication system may include user equipment 11, a base station 12, and an LMF 13.

Among them, the user equipment 11 may be, for example, a terminal side device such as a mobile phone, a tablet personal computer, a laptop computer, a personal digital assistant (PDA), a mobile Internet device (MID), a wearable device, a smart car, a vehicle-mounted device, or a robot, etc. It should be noted that, in the present disclosure, the specific type of the user equipment 11 is not limited.

Among them, the base station 12 is an apparatus deployed in an access network and configured to provide a wireless communication function for the user equipment 11. The base station 12 may include, for example, various forms of macro base stations, micro base stations, relay stations, access points, transmission reception points (TRPs), or the like. In a system using different radio access technologies, the name of a device with a base station function may be different, and the device with a base station function is referred to as a gNodeB or a gNB in a 5G new radio (NR) system. With the evolution of communication technologies, the description of the name "base station" may change.

Among them, the LMF 13 is a location management function entity, and may be used for measurement of an uplink positioning reference signal. The position of the user equipment 11 may be determined based on the measurement result, to implement positioning of the user equipment.

FIG. 2 is a flowchart of a method for activating or deactivating an uplink positioning reference signal shown according to an example embodiment. The method may be applied to the user equipment shown in FIG. 1. Referring to FIG. 2, the method may include the following step.

In step S21, an activation request or a deactivation request for an uplink positioning reference signal is sent to a base station, where the activation request or deactivation request is used to request the base station to activate or deactivate the uplink positioning reference signal.

It should be noted that, when the user equipment needs to be positioned, the user equipment may send the activation request for the uplink positioning reference signal to the base station, where the activation request is correspondingly used to request the base station to activate the uplink positioning reference signal. The activation of the uplink positioning reference signal may be understood as that the user equipment may send the uplink positioning reference signal to the base station, and the LMF may perform uplink positioning measurement according to the received uplink positioning reference signal, so as to determine the position of the user equipment based on the measurement information. After the positioning of the user equipment is completed, the user equipment may send the deactivation request for the uplink positioning reference signal to the base station, where the deactivation request is correspondingly used to request the base station to deactivate the uplink positioning reference signal. The deactivation of the uplink positioning reference signal may be understood as that the user equipment stops sending the uplink positioning reference signal, thus reducing power consumption of the user equipment.

According to the foregoing manner, for the user equipment in the RRC idle state, the user equipment actively sends an activation request or a deactivation request for the uplink positioning reference signal to the base station to request the base station to activate or deactivate the uplink positioning reference signal, thus avoiding the situation that the power consumption of the user equipment is increased due to the fact that the user equipment sends the uplink positioning reference signal all the time when the base station does not send the deactivation command to the user equipment, and meanwhile, further avoiding the situation that the power consumption of the user equipment is increased due to signaling transmission in the procedure that the user equipment is required to switch from the RRC idle state to the RRC connected state when the base station sends the activation command or the deactivation command to the user equipment.

In some embodiments, the uplink positioning reference signal may be an aperiodic uplink positioning reference signal or a semi-persistent uplink positioning reference signal.

In some embodiments, the activation request and the deactivation request may be carried in preset signaling, and the preset signaling here may be, for example, at least one of radio resource control (RRC) signaling and medium access control (MAC) signaling in a random access procedure initiated by the user equipment. In this case, step S21 shown in FIG. 1 may be implemented in the following manner. In the random access procedure of the user equipment, the activation request or the deactivation request for the uplink positioning reference signal is sent to the base station by using preset signaling. It should be noted that the user equipment carries the activation request or the deactivation request in the random access procedure. That is, the user equipment does not need to switch to the RRC connected state, nor does the user equipment need to receive the activation command or the deactivation command in the RRC connected state, thus reducing the power consumption caused by signaling transmission in the procedure that the user equipment switches from the RRC idle state to the RRC connected state.

In some embodiments, the activation request and the deactivation request may carry an identifier of the uplink positioning reference signal, and the identifier is used to uniquely correspond to an uplink positioning reference signal.

FIG. 3 is a flowchart of a method for activating an uplink positioning reference signal shown according to an example embodiment. The method may be applied to the user equipment shown in FIG. 1. Referring to FIG. 3, the method includes the following step.

In step S31, an activation request for an uplink positioning reference signal is sent to a base station, where the activation request is used to request the base station to activate the uplink positioning reference signal.

In an implementation, the activation request may carry an identifier of the uplink positioning reference signal and first activation time information, where the first activation time information is used to represent time information recommended by the user equipment to send the uplink positioning reference signal.

According to the foregoing manner, the user equipment may send the activation request carrying the identifier of the uplink positioning reference signal to the base station, so that the base station may identify the uplink positioning reference signal requested to be activated by the user equipment. In addition, the user equipment may send the activation request carrying the first activation time information to the base station, where the first activation time information is the time information recommended by the user equipment to send the uplink positioning reference signal, so that the base station may determine the activation time of the uplink positioning reference signal, and/or may indicate the duration of sending the uplink positioning reference signal by the user equipment.

In some embodiments, the first activation time information may include at least one of the following:
a first activation start moment;
a first activation start moment and a first activation stop moment; or
a first activation start moment and a first activation duration.

Among them, the first activation start moment is used to represent a start moment to send the uplink positioning reference signal recommended by the user equipment, that is, the user equipment may start to send the uplink positioning reference signal from the start moment. The first activation stop moment is used to represent a deadline moment to send uplink positioning reference signal recommended by the user equipment, that is, the user equipment may send the uplink positioning reference signal before the deadline moment. The first activation duration is used to represent the duration of sending the uplink positioning reference signal recommended by the user equipment, that is, from the first activation start moment to the moment obtained by extending the first activation start moment by the first activation duration, the user equipment sends the uplink positioning reference signal.

According to the foregoing manner, the user equipment may provide a plurality of pieces of time information for sending the uplink positioning reference signal to the base station.

FIG. 4 is a flowchart of a method for deactivating an uplink positioning reference signal shown according to an example embodiment. The method may be applied to the user equipment shown in FIG. 1. Referring to FIG. 4, the method includes the following step.

In step S41, a deactivation request for an uplink positioning reference signal is sent to a base station, where the deactivation request is used to request the base station to deactivate the uplink positioning reference signal.

In an implementation, the deactivation request may carry an identifier of the uplink positioning reference signal and first deactivation time information, where the first deactivation time information is used to represent time information recommended by the user equipment to stop sending the uplink positioning reference signal.

According to the foregoing manner, the user equipment may send the deactivation request carrying the identifier of the uplink positioning reference signal to the base station, so that the base station may identify the uplink positioning reference signal requested to be deactivated by the user equipment. In addition, the user equipment may send the deactivation request carrying the first deactivation time information to the base station, where the first activation time information is time information recommended by the user equipment to stop sending the uplink positioning reference signal, so that the base station may determine the deactivation time of the uplink positioning reference signal, and/or may indicate the duration for the user equipment to stop sending the uplink positioning reference signal.

In some embodiments, the first deactivation time information may include at least one of the following:
a first deactivation start moment;
a first deactivation start moment and a first deactivation stop moment; or
a first deactivation start moment and a first deactivation duration.

Among them, the first deactivation start moment is used to represent a start moment to stop sending the uplink positioning reference signal recommended by the user equipment, that is, the user equipment may start to stop sending the uplink positioning reference signal from the start moment. The first deactivation stop moment is used to represent a deadline moment to stop sending the uplink positioning reference signal recommended by the user equipment, that is, the user equipment stops sending the uplink positioning reference signal before the deadline moment. The first deactivation duration is used to represent a duration of stopping sending the uplink positioning reference signal recommended by the user equipment, that is, from the first deactivation start moment to the moment obtained by extending the first deactivation start moment by the first deactivation duration, the user equipment stops sending the uplink positioning reference signal.

According to the foregoing manner, the user equipment may provide a plurality of pieces of time information for stopping sending the uplink positioning reference signal to the base station.

In some embodiments, the first activation time information and the first deactivation time information may be determined by the user equipment.

FIG. 5 is a flowchart of a method for activating or deactivating an uplink positioning reference signal shown according to an example embodiment. The method may be applied to the user equipment shown in FIG. 1. Referring to FIG. 5, the method includes the following steps.

In step S51, an activation request or a deactivation request for an uplink positioning reference signal is sent to a base station, where the activation request or the deactivation request is used to request the base station to activate or deactivate the uplink positioning reference signal.

In step S52, an activation command or a deactivation command sent by the base station based on the activation request or the deactivation request is received.

In step S53, the uplink positioning reference signal is sent or stopped sending according to the activation command or the deactivation command.

Among them, for step S51, reference may be made to the foregoing related embodiments, and details are not described here again in the embodiment.

Among them, the activation command is used to instruct the user equipment to send the uplink positioning reference signal, and the deactivation command is used to instruct the user equipment to stop sending the uplink positioning reference signal.

According to the foregoing manner, the user equipment sends the uplink positioning reference signal according to the activation command, to realize the positioning requirement of the user equipment. The user equipment stops sending the uplink positioning reference signal according to the deactivation command, to realize the requirement for reducing the power consumption.

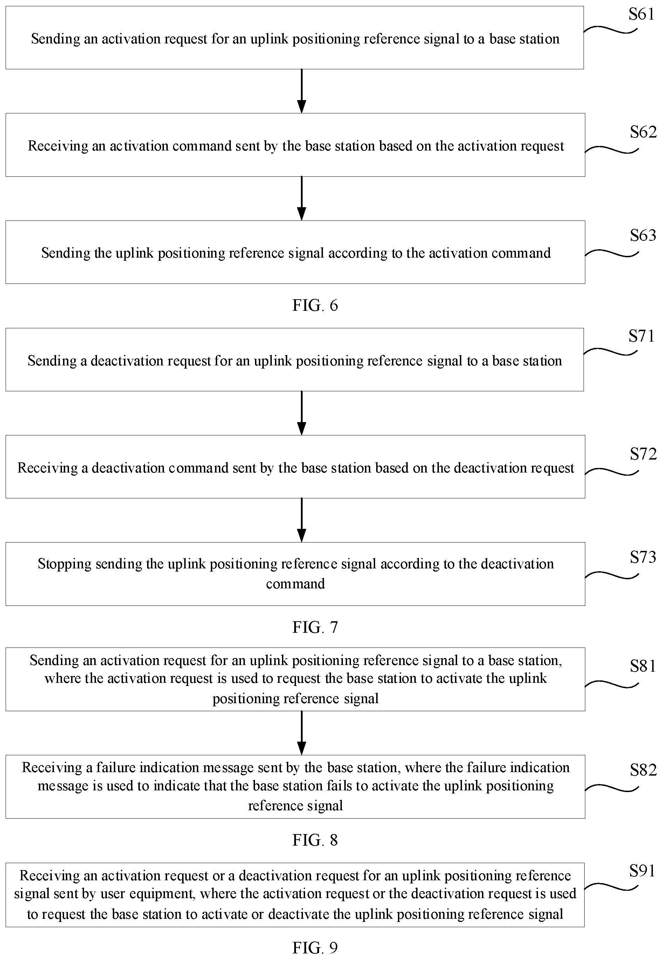

FIG. 6 is a flowchart of a method for activating an uplink positioning reference signal shown according to an example embodiment. The method may be applied to the user equipment shown in FIG. 1. Referring to FIG. 6, the method includes the following steps.

In step S61, an activation request for an uplink positioning reference signal is sent to a base station.

In step S62, an activation command sent by the base station based on the activation request is received.

In step S63, an uplink positioning reference signal is sent according to the activation command.

Among them, for the implementation of step S61, reference may be made to the foregoing related embodiments, and details are not described here again in the embodiment.

In an implementation, the activation command may include second activation time information, and the second activation time information is information determined by the base station and used to instruct the user equipment to send an uplink positioning reference signal. Among them, the second activation time information may include at least one of the following:
a second activation start moment;
a second activation start moment and a second activation stop moment; or
a second activation start moment and a second activation duration.

Among them, the second activation start moment is used to represent a start moment to send the uplink positioning reference signal determined by the base station, that is, the user equipment may start to send an uplink positioning reference signal from the start moment. The second activation stop moment is used to represent a deadline moment to send the uplink positioning reference signal determined by the base station, that is, the user equipment may send an uplink positioning reference signal before the deadline moment. The second activation duration is used to represent the duration of sending the uplink positioning reference signal determined by the base station, that is, from the second activation start moment to the moment obtained by extending the second activation start moment by the second activation duration, the user equipment may send the uplink positioning reference signal.

It should be noted that the user equipment may provide the first activation time information recommended by the user equipment to the base station, but the base station needs to determine, based on the actual communication situation of the communication system, the time information (i.e. the second activation time information) to actually send the uplink positioning reference signal by the user equipment. Therefore, the second activation start moment may be the same as or different from the first activation start moment, which is determined by the base station according to the actual communication situation. Similarly, whether the first activation stop moment and the second activation stop moment are the same may be determined by the base station according to the actual communication situation. Whether the first activation duration and the second activation duration are the same may be determined by the base station according to the actual communication situation.

According to the foregoing manner, the user equipment actively sends the activation request based on its own requirements, without receiving and parsing the indication information that the base station instructs the user equipment to switch from the RRC idle state to the RRC connected state, thus reducing the power consumption of the user equipment. In addition, the uplink positioning reference signal is sent based on the activation command, to realize the positioning of the user equipment.

In some embodiments, in a case that the activation command includes the second activation time information, step S63 may be implemented in the following manner. The uplink positioning reference signal is sent according to the second activation time information in the activation command.

For example, the second activation time information includes the second activation start moment, and the user equipment may send the uplink positioning reference signal at the second activation start moment, to realize the positioning of the user equipment.

For example, the second activation time information includes the second activation start moment and the second activation stop moment. The user equipment sends the uplink positioning reference signal from the second activation start moment until the second activation stop moment. It may be understood that, when the second activation stop moment is reached, the user equipment may stop sending the uplink positioning reference signal, that is, the deactivation of the uplink positioning reference signal may be realized without sending the deactivation request by the user equipment, thus further reducing the power consumption of the user equipment.

For example, the second activation time information includes the second activation start moment and the second activation duration. The user equipment may send the uplink positioning reference signal from the second activation start moment until the duration of sending the uplink positioning reference signal reaches the second activation duration. It may be understood that, when the duration of sending the uplink positioning reference signal reaches the second activation duration, the user equipment may stop sending the uplink positioning reference signal, that is, the deactivation of the uplink positioning reference signal may be realized without sending the deactivation request by the user equipment, thus further reducing the power consumption of the user equipment.

FIG. 7 is a flowchart of a method for deactivating an uplink positioning reference signal shown according to an example embodiment. The method may be applied to the user equipment shown in FIG. 1. Referring to FIG. 7, the method includes the following steps.

In step S71, a deactivation request for an uplink positioning reference signal is sent to a base station.

In step S72, a deactivation command sent by the base station based on the deactivation request is received.

In step S73, it is stopped sending the uplink positioning reference signal according to the deactivation command.

Among them, for the implementation of step S71, reference may be made to the foregoing related embodiments, and details are not described here again in the embodiment.

In an implementation, the deactivation command may include second deactivation time information, and the second deactivation time information is information determined by the base station and used to instruct the user equipment to stop sending the uplink positioning reference signal. Among them, the second deactivation time information may include at least one of the following:
a second deactivation start moment;
a second deactivation start moment and a second deactivation stop moment; or
a second deactivation start moment and a second deactivation duration.

Among them, the second deactivation start moment is used to represent a start moment to stop sending the uplink positioning reference signal determined by the base station, that is, the user equipment may start to stop sending the uplink positioning reference signal at the start moment. The second deactivation stop moment is used to represent a deadline moment to stop sending the uplink positioning reference signal determined by the base station, that is, the user equipment stops sending the uplink positioning reference signal before the deadline moment. The second deactivation duration is used to represent the duration of stopping sending the uplink positioning reference signal determined by the base station, that is, from the second deactivation start moment to the moment obtained by extending the second deactivation start moment by the second deactivation duration, the user equipment stops sending the uplink positioning reference signal.

It should be noted that the user equipment may provide the first deactivation time information recommended by the user equipment to the base station; but, the base station needs to determine, based on the actual communication situation of the communication system, the time information (i.e., the second deactivation time information) to actually send the uplink positioning reference signal by the user equipment. Therefore, the second deactivation start moment may be the same as or different from the first deactivation start moment, which is determined by the base station according to the actual communication situation. Similarly, whether the first deactivation stop moment and the second deactivation stop moment are the same may be determined by the base station according to the actual communication situation. Whether the first deactivation duration and the second deactivation duration are the same may be determined by the base station according to the actual communication situation.

According to the foregoing manner, the user equipment actively sends the deactivation request based on its own requirements, without receiving and parsing the indication information that the base station instructs the user equipment to switch from the RRC idle state to the RRC connected state, thus reducing the power consumption of the user equipment. In addition, the user equipment stops sending the uplink positioning reference signal based on the deactivation command, so as to avoid the situation that power consumption is caused due to the fact that the user equipment sends the uplink positioning reference signal all the time when the base station does not indicate the deactivation.

In some embodiments, in a case that the deactivation command includes the second deactivation time information, step S73 may be implemented in the following manner. It is stopped sending the uplink positioning reference signal according to the second deactivation time information in the deactivation command.

For example, the second deactivation time information includes the second deactivation start moment, and the user equipment may stop sending the uplink positioning reference signal from the second deactivation start moment, to reduce power consumption of the user equipment.

For example, the second deactivation time information includes the second deactivation start moment and the second deactivation stop moment, and the user equipment stops sending the uplink positioning reference signal from the second deactivation start moment until the second deactivation stop moment. It may be understood that, when the second activation stop moment is reached, the user equipment may send the uplink positioning reference signal after the second activation stop moment, that is, the activation of the uplink positioning reference signal may be realized without sending the activation request by the user equipment, thus further reducing the power consumption of the user equipment.

For example, the second deactivation time information includes the second deactivation start moment and the second deactivation duration, and the user equipment stops sending the uplink positioning reference signal from the second deactivation start moment until the duration of stopping sending the uplink positioning reference signal reaches the second deactivation duration. It may be understood that, when the duration of stopping sending the uplink positioning reference signal reaches the second deactivation duration, the user equipment may start sending the uplink positioning reference signal after this moment, that is, the activation of the uplink positioning reference signal may be realized without sending the activation request by the user equipment, thus further reducing the power consumption of the user equipment.

FIG. 8 is a flowchart of a method for activating an uplink positioning reference signal shown according to an example embodiment. The method may be applied to the user equipment shown in FIG. 1. Referring to FIG. 8, the method includes the following steps.

In step S81, an activation request for an uplink positioning reference signal is sent to a base station, where the activation request is used to request the base station to activate the uplink positioning reference signal.

In step S82, a failure indication message sent by the base station is received, where the failure indication message is used to indicate that the base station fails to activate the uplink positioning reference signal.

For example, in a case that there is no idle resource for responding to the positioning requirement of the user equipment, that is, when the base station is unable to respond to the activation request, the base station may generate a failure indication message and send the failure indication message to the user equipment.

In this way, the user equipment may obtain the message that the base station fails to activate the uplink positioning reference signal, so that the user equipment resends the activation request, to realize the positioning of the user equipment.

FIG. 9 is a flowchart of a method for activating or deactivating an uplink positioning reference signal shown according to an example embodiment. The method may be applied to the base station shown in FIG. 1. Referring to FIG. 9, the method includes the following step.

In step S91, an activation request or a deactivation request for an uplink positioning reference signal sent by user equipment is received, where the activation request or the deactivation request is used to request the base station to activate or deactivate the uplink positioning reference signal.

It should be noted that, when the user equipment needs to be positioned, the user equipment may send the activation request for the uplink positioning reference signal to the base station, where the activation request is correspondingly used to request the base station to activate the uplink positioning reference signal. The activation of the uplink positioning reference signal may be understood as that the user equipment may send the uplink positioning reference signal to the base station, and the base station may perform uplink positioning measurement according to the received uplink positioning reference signal, so as to determine the position of the user equipment based on the measurement information. After the positioning of the user equipment is completed, the user equipment may send the deactivation request for the uplink positioning reference signal to the base station, where the deactivation request is correspondingly used to request the base station to deactivate the uplink positioning reference signal. The deactivation of the uplink positioning reference signal may be understood as that the user equipment stops sending the uplink positioning reference signal, thus reducing power consumption of the user equipment.

According to the foregoing manner, for the user equipment in the RRC idle state, the user equipment actively sends an activation request or a deactivation request for the uplink positioning reference signal to the base station to request the base station to activate or deactivate the uplink positioning reference signal, thus avoiding the situation that the power consumption of the user equipment is increased due to the fact that the user equipment sends the uplink positioning reference signal all the time when the base station does not send the deactivation command to the user equipment, and meanwhile, further avoiding the situation that the power consumption of the user equipment is increased due to signaling transmission in the procedure that the user equipment is required to switch from the RRC idle state to the RRC connected state when the base station sends the activation command or the deactivation command to the user equipment, so that the power consumption of the user equipment is reduced.

In some embodiments, the activation request received by the base station may include the first activation time information, and the deactivation request received by the base station may include the first deactivation time information. For explanation of the first activation time information and the first deactivation time information, reference may be made to the foregoing related embodiments, and details are not described here again in the embodiment.

In some embodiments, the uplink positioning reference signal may be an aperiodic uplink positioning reference signal or a semi-persistent uplink positioning reference signal.

In some embodiments, the activation request and the deactivation request may be carried in preset signaling. For explanation of the preset command, reference may be made to the foregoing related embodiments, and details are not described here again in the embodiment.

In some embodiments, the activation request and the deactivation request may carry an identifier of the uplink positioning reference signal, and the identifier is used to uniquely correspond to an uplink positioning reference signal.

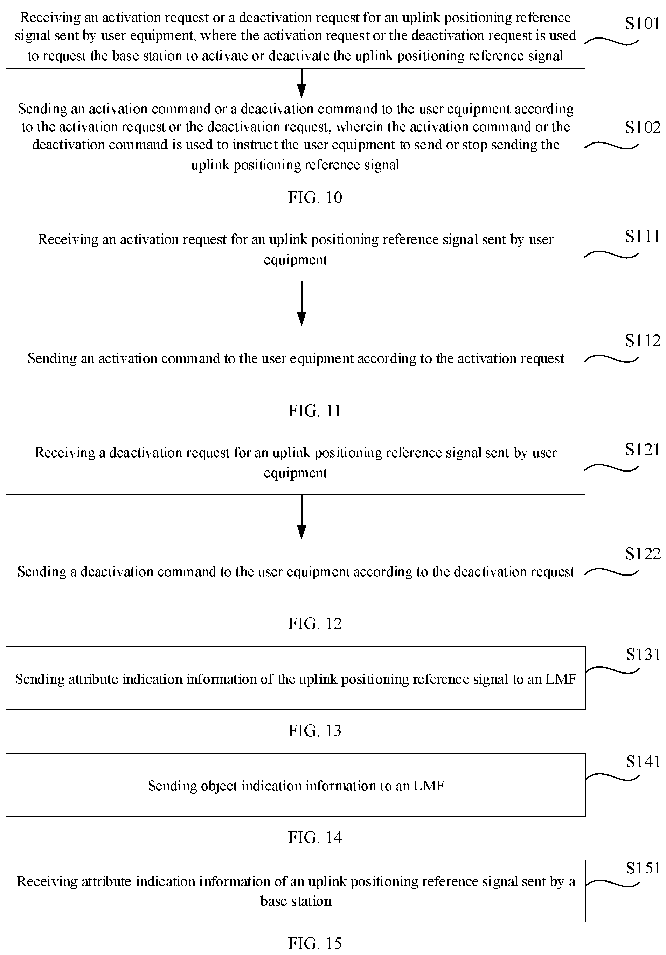

FIG. 10 is a flowchart of a method for activating or deactivating an uplink positioning reference signal shown according to an example embodiment. The method may be applied to the base station shown in FIG. 1. Referring to FIG. 10, the method includes the following steps.

In step S101, an activation request or a deactivation request for an uplink positioning reference signal sent by user equipment is received, where the activation request or the deactivation request is used to request the base station to activate or deactivate the uplink positioning reference signal.

In step S102, an activation command or a deactivation command is sent to the user equipment according to the activation request or the deactivation request, where the activation command or the deactivation command is used to instruct the user equipment to send or stop sending the uplink positioning reference signal.

Among them, for the implementation of step S101, reference may be made to the foregoing related embodiments, and details are not described here again in the embodiment.

Among them, for explanation of the activation command or the deactivation command, reference may be made to the foregoing related embodiments, and details are not described here again in the embodiment.

According to the foregoing manner, the user equipment sends the uplink positioning reference signal according to the activation command sent by the base station, to realize the positioning requirement of the user equipment. The user equipment stops sending the uplink positioning reference signal according to the deactivation command sent by the base station, to realize the requirement for reducing the power consumption. In addition, for the user equipment in the RRC idle state, sending the activation command or the deactivation command does not require the user equipment to switch from the RRC idle state to the RRC connected state, thus avoiding the situation that the power consumption of the user equipment is increased due to signaling transmission in the procedure that the user equipment switches from the RRC idle state to the RRC connected state.

FIG. 11 is a flowchart of a method for activating an uplink positioning reference signal shown according to an example embodiment. The method may be applied to the base station shown in FIG. 1. Referring to FIG. 11, the method includes the following steps.

In step S111, an activation request for an uplink positioning reference signal sent by user equipment is received.

In step S112, an activation command is sent to the user equipment according to the activation request.

In an implementation, the activation command may include second activation time information. For explanation of the second activation time information, reference may be made to the foregoing related embodiments, and details are not described here again in the embodiment.

According to the foregoing manner, the user equipment sends the uplink positioning reference signal according to the activation command sent by the base station, to realizing the positioning requirement of the user equipment. The base station is also able to transmit the activation command to the user equipment, where the user equipment is not required to switch from the RRC idle state to the RRC connected state, thus further reducing the power consumption of the user equipment.

FIG. 12 is a flowchart of a method for deactivating an uplink positioning reference signal shown according to an example embodiment. The method may be applied to the base station shown in FIG. 1. Referring to FIG. 12, the method includes the following steps.

In step S121, a deactivation request for an uplink positioning reference signal sent by user equipment is received.

In step S122, a deactivation command is sent to the user equipment according to the deactivation request.

In an implementation, the deactivation command may include second deactivation time information. For explanation of the second deactivation time information, reference may be made to the foregoing related embodiments, and details are not described here again in the embodiment.

According to the foregoing manner, the user equipment stops sending the uplink positioning reference signal according to the deactivation command sent by the base station, so as to reduce the power consumption for the positioning of the user equipment. The base station is also able to transmit the deactivation command to the user equipment, where the user equipment is not required to switch from the RRC idle state to the RRC connected state, thus further reducing the power consumption of the user equipment.

In some embodiments, in a case that the base station is unable to activate the uplink positioning reference signal, the base station may send a failure indication message to the user equipment, where the failure indication message is used to indicate that the base station fails to activate the uplink positioning reference signal.

It should be noted that, in a case that there is no idle resource for the base station to respond to the positioning requirement of the user equipment, that is, the base station is unable to respond to the activation request, the base station may generate a failure indication message and send the failure indication message to the user equipment.

In this way, the user equipment may obtain the message that the base station fails to activate the uplink positioning reference signal, so that the user equipment resends the activation request, to realize the positioning of the user equipment.

FIG. 13 is a flowchart of a method for activating or deactivating an uplink positioning reference signal shown according to an example embodiment. The method may be applied to the base station shown in FIG. 1. Referring to FIG. 13, the method includes the following step.

In step S131, attribute indication information of the uplink positioning reference signal is sent to an LMF.

In an implementation, the attribute indication information may include at least one of the following:
an identifier of the uplink positioning reference signal;
an activation state or a deactivation state of the uplink positioning reference signal; or
second activation time information or second deactivation time information.

Among them, the base station may notify the LMF of the identifier of the uplink positioning reference signal, so that the LMF may identify the corresponding uplink positioning reference signal. The base station may notify the LMF of the activation state of the uplink positioning reference signal, so that the LMF performs measurement on the uplink positioning reference signal. The base station may notify the LMF of the deactivation state of the uplink positioning reference signal, so that the LMF stops measurement of the uplink positioning reference signal, to reduce resource occupation. The base station may notify the LMF of the second activation time information, so that the LMF determines the time to perform measurement on the uplink positioning reference signal. The base station may notify the LMF of the second deactivation time information, so that the LMF determines the time to stop measurement on the uplink positioning reference signal.

FIG. 14 is a flowchart of a method for activating or deactivating an uplink positioning reference signal shown according to an example embodiment. The method may be applied to the base station shown in FIG. 1. Referring to FIG. 14, the method includes the following step.

In step S141, object indication information is sent to an LMF.

Among them, the object indication information is used to indicate that the activation state or the deactivation state of the uplink positioning reference signal is determined according to an activation request or a deactivation request sent by the user equipment.

According to the foregoing manner, the object indication information is sent to the LMF, so that the LMF may determine that the activation state or the deactivation state of the uplink positioning reference signal is determined based on an activation request or a deactivation request sent by the user equipment. In addition, for the user equipment in the RRC idle state, the user equipment actively sends the activation request or the deactivation request for the uplink positioning reference signal to the base station according to its own requirements, to request the base station to activate or deactivate the uplink positioning reference signal, to request the base station to activate or deactivate the uplink positioning reference signal, thus avoiding the situation that the power consumption of the user equipment is increased due to the fact that the user equipment sends the uplink positioning reference signal all the time when the base station does not send the deactivation command to the user equipment, and meanwhile, further avoiding the situation that the power consumption of the user equipment is increased due to signaling transmission in the procedure that the user equipment is required to switch from the RRC idle state to the RRC connected state when the base station sends the activation command or the deactivation command to the user equipment, so that the power consumption of the user equipment is reduced.

In some embodiments, the object indication information and the attribute indication information may be carried in an NRPPa message, where the NRPPa message may be, for example, a POSITIONING INFORMATION UPDATE or a POSITIONING ACTIVATION RESPONSE.

FIG. 15 is a flowchart of a method for activating or deactivating an uplink positioning reference signal shown according to an example embodiment. The method may be applied to the LMF shown in FIG. 1. Referring to FIG. 15, the method includes the following step.

In step S151, attribute indication information of an uplink positioning reference signal sent by a base station is received.

Among them, the attribute indication information includes an activation state or a deactivation state of the uplink positioning reference signal, and the activation state or the deactivation state is determined by the base station according to an activation request or a deactivation request sent by the user equipment.

According to the foregoing manner, the base station may notify the LMF of the activated state of the uplink positioning reference signal, so that the LMF performs measurement on the uplink positioning reference signal. The base station may notify the LMF of the deactivated state of the uplink positioning reference signal, so that the LMF stops measurement of the uplink positioning reference signal, thus reducing resource occupation.

In addition, for the user equipment in the RRC idle state, the user equipment actively sends an activation request or a deactivation request for the uplink positioning reference signal to the base station according to its own requirements, to request the base station to activate or deactivate the uplink positioning reference signal, thus avoiding the situation that the power consumption of the user equipment is increased due to the fact that the user equipment sends the uplink positioning reference signal all the time when the base station does not send the deactivation command to the user equipment, and meanwhile, further avoiding the situation that the power consumption of the user equipment is increased due to signaling transmission in the procedure that the user equipment is required to switch from the RRC idle state to the RRC connected state when the base station sends the activation command or the deactivation command to the user equipment, so that the power consumption of the user equipment is reduced.

In some embodiments, the attribute indication information may further include at least one of the following:
an identifier of the uplink positioning reference signal; or
second activation time information or second deactivation time information.

Among them, the base station may notify the LMF of the identifier of the uplink positioning reference signal, so that the LMF may identify the corresponding uplink positioning reference signal. The base station may notify the LMF of the second activation time information, so that the LMF determines the time to perform measurement on the uplink positioning reference signal. The base station may notify the LMF of the second deactivation time information, so that the LMF determines the time to stop measurement on the uplink positioning reference signal.

In some embodiments, the method may further include: receiving, by the LMF, the object indication information sent by the base station, where the object indication information is used to indicate that the activation state or the deactivation state of the uplink positioning reference signal is determined according to an activation request or a deactivation request sent by the user equipment.

According to the foregoing manner, the object indication information is sent to the LMF, so that the LMF may determine that the activation state or the deactivation state of the uplink positioning reference signal is determined according to the activation request or the deactivation request sent by the user equipment.

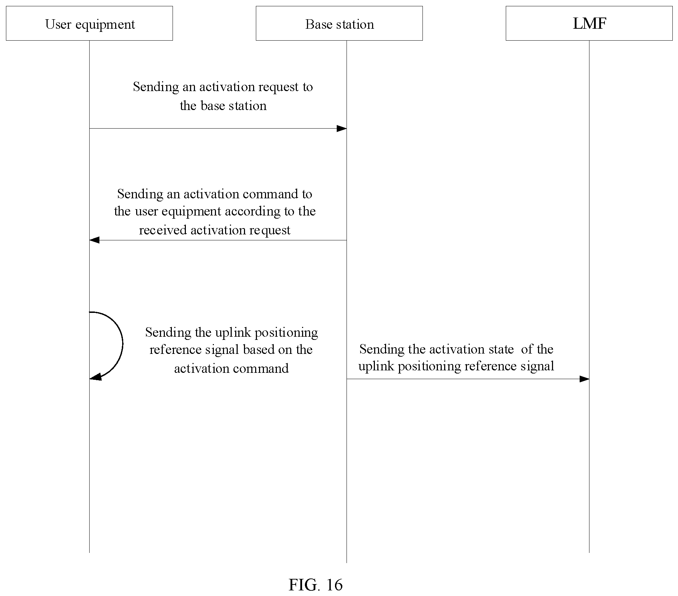

FIG. 16 is a flowchart of activating an uplink positioning reference signal shown according to an example embodiment, which is applied to the communication system shown in FIG. 1. Referring to FIG. 16, when the user equipment needs to be positioned, the user equipment sends an activation request to the base station, the base station sends an activation command to the user equipment based on the received activation request, and the user equipment sends the uplink positioning reference signal based on the activation command. The base station sends the activation state of the uplink positioning reference signal to the LMF, so that the LMF performs measurement based on the uplink positioning reference signal sent by the user equipment, to realize the positioning of the user equipment. Among them, on the basis of realizing the positioning of the user equipment, for the user equipment in the RRC idle state, the user equipment actively sends the activation request for the uplink positioning reference signal to the base station, to request the base station to activate the uplink positioning reference signal, thus avoiding the situation that the power consumption of the user equipment is increased due to signaling transmission in the procedure that the user equipment is required to switch from the RRC idle state to the RRC connected state when the base station sends the activation command to the user equipment.

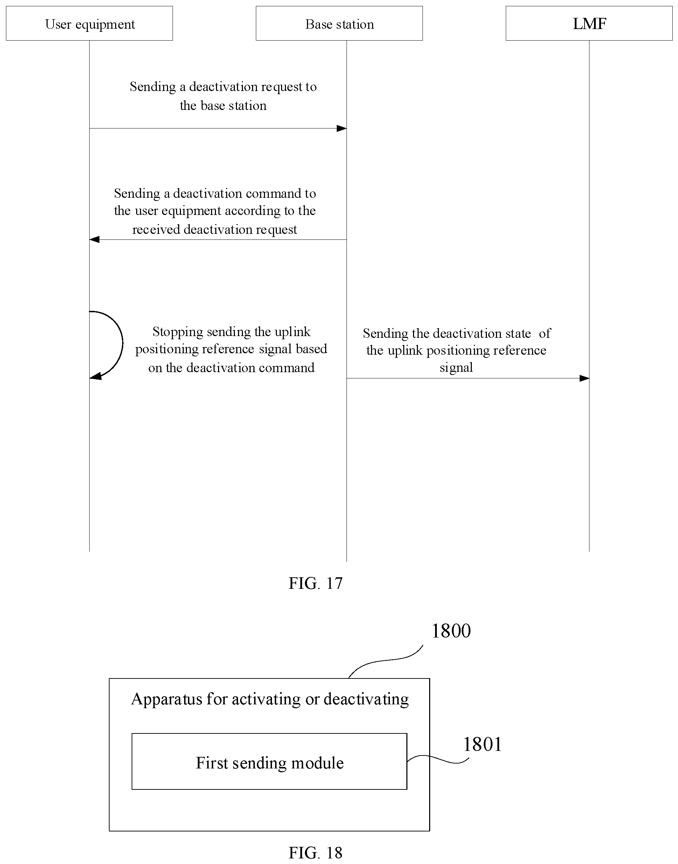

FIG. 17 is a flowchart of deactivating an uplink positioning reference signal shown according to an example embodiment, which is applied to the communication system shown in FIG. 1. Referring to FIG. 17, when the positioning of the user equipment is completed, the user equipment sends a deactivation request to the base station, the base station sends a deactivation command to the user equipment based on the received deactivation request, and the user equipment stops sending the uplink positioning reference signal based on the deactivation command. The base station sends the deactivation state of the uplink positioning reference signal to the LMF, so that the LMF stops measurement of the uplink positioning reference signal sent by the user equipment. Among them, for the user equipment in the RRC idle state, the user equipment actively sends the deactivation request for the uplink positioning reference signal to the base station, to request the base station to deactivate the uplink positioning reference signal, thus avoiding the situation that the power consumption of the user equipment is increased due to the fact that the user equipment sends the uplink positioning reference signal all the time when the base station does not send the deactivation command to the user equipment, and meanwhile, further avoiding the situation that the power consumption of the user equipment is increased due to signaling transmission in the procedure that the user equipment is required to switch from the RRC idle state to the RRC connected state when the base station sends the deactivation command to the user equipment.

FIG. 18 is a block diagram of an apparatus for activating or deactivating shown according to an example embodiment, which is applied in user equipment. Referring to FIG. 18, the apparatus for activating or deactivating 1800 includes a first sending module 1801.

The first sending module 1801 is configured to send an activation request or a deactivation request for an uplink positioning reference signal to a base station, where the activation request or the deactivation request is used to request the base station to activate or deactivate the uplink positioning reference signal.

Optionally, the first sending module is specifically configured to, in a random access procedure of the user equipment, send the activation request or the deactivation request for the uplink positioning reference signal to the base station by using preset signaling, where the preset signaling includes at least one of RRC signaling and MAC signaling.

Optionally, the activation request and the deactivation request include an identifier of the uplink positioning reference signal.

Optionally, the activation request further includes first activation time information, and the deactivation request further includes first deactivation time information.

Optionally, the first activation time information includes at least one of the following:
a first activation start moment;
a first activation start moment and a first activation stop moment; or
a first activation start moment and a first activation duration.

Optionally, the first deactivation time information includes at least one of the following:
a first deactivation start moment;
a first deactivation start moment and a first deactivation stop moment;
a first deactivation start moment and a first deactivation duration.

Optionally, the apparatus for activating or deactivating 1800 further includes a third receiving module and a second sending module.

The third receiving module is configured to receive an activation command or a deactivation command sent by the base station based on the activation request or the deactivation request.

The second sending module is configured to send or stop sending the uplink positioning reference signal according to the activation command or the deactivation command.

Optionally, the activation command includes second activation time information, and the second activation time information includes at least one of the following:
a second activation start moment;
a second activation start moment and a second activation stop moment; or
a second activation start moment and a second activation duration.

Optionally, the deactivation command includes second deactivation time information, and the second deactivation time information includes at least one of the following:
a second deactivation start moment;
a second deactivation start moment and a second deactivation stop moment; and
a second deactivation start moment and a second deactivation duration.

Optionally, the second sending module is specifically configured to send the uplink positioning reference signal according to the second activation time information in the activation command.

Optionally, the second sending module is specifically configured to stop sending the uplink positioning reference signal according to the second deactivation time information in the deactivation command.

Optionally, the apparatus for activating or deactivating 1800 further includes a fourth receiving module.

The fourth receiving module is configured to receive a failure indication message sent by the base station, where the failure indication message is used to indicate that the base station fails to activate the uplink positioning reference signal.

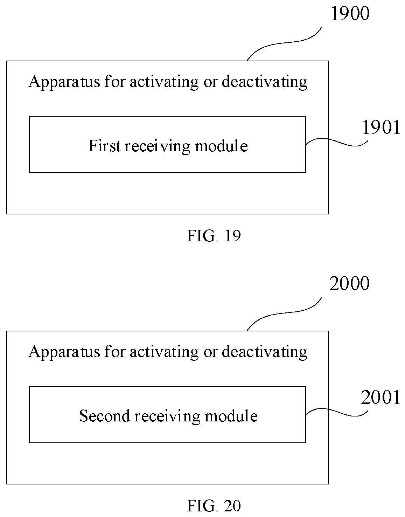

FIG. 19 is a block diagram of an apparatus for activating or deactivating shown according to an example embodiment, which is applied in a base station. Referring to FIG. 19, the apparatus for activating or deactivating 1900 includes a first receiving module 1901.

The first receiving module 1901 is configured to receive an activation request or a deactivation request for an uplink positioning reference signal sent by user equipment, where the activation request or the deactivation request is used to request the base station to activate or deactivate the uplink positioning reference signal.

Optionally, the activation request includes first activation time information, and the deactivation request includes first deactivation time information.

Optionally, the apparatus for activating or deactivating 1900 further includes a third sending module.

The third sending module is configured to send an activation command or a deactivation command to the user equipment according to the activation request or the deactivation request, where the activation command or the deactivation command is used to instruct the user equipment to send or stop sending the uplink positioning reference signal.

Optionally, the activation command includes second activation time information, and the deactivation command includes second deactivation time information.

Optionally, the apparatus for activating or deactivating 1900 further includes a fourth sending module.

The fourth sending module is configured to, in a case that the base station is unable to activate the uplink positioning reference signal, send a failure indication message to the user equipment, where the failure indication message is used to indicate that the base station fails to activate the uplink positioning reference signal.

Optionally, the apparatus for activating or deactivating 1900 further includes a fifth sending module.

The fifth sending module is configured to send attribute indication information of the uplink positioning reference signal to an LMF, where the attribute indication information includes at least one of the following:
an identifier of the uplink positioning reference signal;
an activation state or a deactivation state of the uplink positioning reference signal; or
second activation time information or second deactivation time information.

Optionally, the apparatus for activating or deactivating 1900 further includes a sixth sending module.

The sixth sending module is configured to send object indication information to the LMF, where the object indication information is used to indicate that the activation state or the deactivation state of the uplink positioning reference signal is determined according to the activation request or the deactivation request sent by the user equipment.

Optionally, the attribute information and the object indication information are carried in an NRPPa message.

FIG. 20 is a block diagram of an apparatus for activating or deactivating shown according to an example embodiment, which is applied in an LMF. Referring to FIG. 20, the apparatus for activating or deactivating 2000 includes a second receiving module 2001.

The second receiving module 2001 is configured to receive attribute indication information of an uplink positioning reference signal sent by a base station, where the attribute indication information includes an activation state or a deactivation state of the uplink positioning reference signal, and the activation state or the deactivation state is determined by the base station according to an activation request or a deactivation request sent by user equipment.

Optionally, the attribute indication information further includes at least one of the following:
an identifier of the uplink positioning reference signal; or
second activation time information or second deactivation time information.

Optionally, the apparatus for activating or deactivating 2000 includes a fifth receiving module.

The fifth receiving module is configured to receive object indication information sent by the base station, where the object indication information is used to indicate that the activation state or the deactivation state of the uplink positioning reference signal is determined according to the activation request or the deactivation request sent by the user equipment.

With regard to the apparatus in the above embodiments, the specific manner in which the modules perform operations has been described in detail in the embodiments related to the method, which will not be elaborated here.

The present disclosure further provides a core network system, which is configured to perform the steps of the method with the LMF as the execution entity.

The present disclosure further provides a core network system, including the LMF described above.

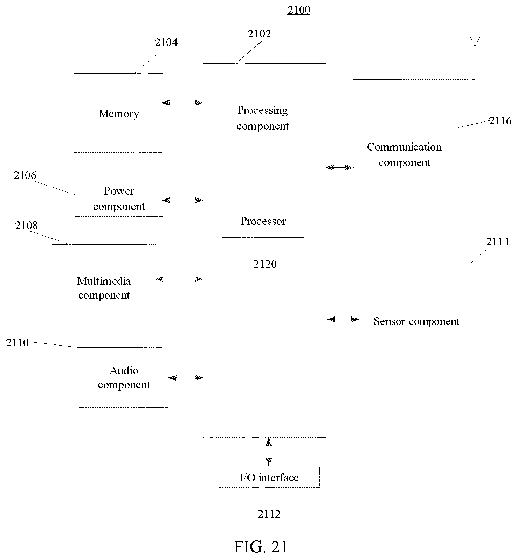

FIG. 21 is a block diagram of an apparatus for activating or deactivating shown according to an example embodiment. The apparatus for activating or deactivating may be the user equipment 11 shown in FIG. 1. The apparatus for activating or deactivating may be a mobile phone, a computer, a digital broadcast terminal, a message transceiver device, a game console, a tablet device, a medical device, a fitness device, a personal digital assistant, or the like.

Referring to FIG. 21, the apparatus for activating or deactivating 2100 may include one or more of the following components: a processing component 2102, a memory 2104, a power component 2106, a multimedia component 2108, an audio component 2110, an input/output (I/O) interface 2112, a sensor component 2114, and a communication component 2116.

The processing component 2102 generally controls overall operations of the apparatus for activating or deactivating 2100, such as operations associated with display, telephone calls, data communications, camera operations, and recording operations. The processing component 2102 may include one or more processors 2120 to execute instructions to complete all or part of the steps of the method for activating or deactivating. In addition, the processing component 2102 may include one or more modules to facilitate interaction between the processing component 2102 and other components. For example, the processing component 2102 may include a multimedia module to facilitate interaction between the multimedia component 2108 and the processing component 2102.

The memory 2104 is configured to store various types of data to support the operation of the apparatus for activating or deactivating 2100. Examples of such data include instructions for any application or method operating on the apparatus for activating or deactivating 2100, contact data, phonebook data, messages, pictures, videos, etc. The memory 2104 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 2106 provides power to various components of the apparatus for activating or deactivating 2100. The power component 2106 may include a power management system, one or more power supplies, and other components associated with generation, management, and distribution of power for the apparatus for activating or deactivating 2100.

The multimedia component 2108 includes a screen providing an output interface between the apparatus for activating or deactivating 2100 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may not only sense a boundary of a touch or slide action, but also detect a duration and pressure associated with the touch or slide action. In some embodiments, the multimedia component 2108 includes a front camera and/or a rear camera. When the apparatus for activating or deactivating 2100 is in an operation mode, such as a photographing mode or a video mode, the front camera and/or the rear camera may receive external multimedia data. Each of the front camera and the rear camera may be a fixed optical lens system or have focal length and optical zoom capability.

The audio component 2110 is configured to output and/or input audio signals. For example, the audio component 2110 includes a microphone (MIC) configured to receive an external audio signal when the apparatus for activating or deactivating 2100 is in an operation mode, such as a call mode, a recording mode, and a speech recognition mode. The received audio signal may be further stored in the memory 2104 or transmitted via the communication component 2116. In some embodiments, the audio component 2110 further includes a speaker to output audio signals.

The input/output interface 2112 provides an interface between the processing component 2102 and a peripheral interface module. The peripheral interface module may be a keyboard, a click wheel, a button, or the like. The button may include, but is not limited to, a home button, a volume button, a starting button, and a locking button.

The sensor component 2114 includes one or more sensors to provide status assessments of various aspects of the apparatus for activating or deactivating 2100. For example, the sensor component 2114 may detect an open or closed state of the apparatus for activating or deactivating 2100, and relative positioning of the components; for example, the components are the display and the keypad of the apparatus 2100. The sensor component 2114 may also detect the position change of the apparatus for activating or deactivating 2100 or one component of the apparatus for activating or deactivating 2100, the presence or absence of contact by the user with the apparatus for activating or deactivating 2100, the orientation or the acceleration or the deceleration of the apparatus for activating or deactivating 2100, and the temperature change of the apparatus for activating or deactivating 2100. The sensor component 2114 may include a proximity sensor configured to detect the presence of nearby objects without any physical contact. The sensor component 2114 may also include an optical sensor, such as a CMOS or CCD image sensor, for use in imaging applications. In some embodiments, the sensor component 2114 may further include an acceleration sensor, a gyroscope sensor, a magnetic sensor, a pressure sensor, or a temperature sensor.

The communication component 2116 is configured to facilitate wired or wireless communication between the apparatus for activating or deactivating 2100 and other devices. The apparatus for activating or deactivating 2100 may access a wireless network based on a communication standard, such as WiFi, 2G, or 3G, or a combination of them. In an example embodiment, the communication component 2116 receives a broadcast signal or broadcast-related information from an external broadcast management system via a broadcast channel. In an example embodiment, the communication component 2116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, or other technologies.

In an example embodiment, the apparatus for activating or deactivating 2100 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for implementing the method for activating or deactivating resources.

In an example embodiment, there is further provided a non-transitory computer-readable storage medium including an instruction, for example, the memory 2104 including an instruction. The instruction may be executed by the processor 2120 of the apparatus for activating or deactivating 2100 to complete the method for activating or deactivating. For example, the non-transitory computer-readable storage medium may be a ROM, a random access memory (RAM), a CD-ROM, a magnetic tape, a floppy disk, an optical data storage device, or the like.

In addition to an independent user side device, the apparatus for activating or deactivating may be a part of an independent user side device. For example, in an embodiment, the apparatus may be an integrated circuit (IC) or a chip, where the integrated circuit may be an IC or a set of more than one IC. The chip may include, but is not limited to, a graphics processing unit (GPU), a central processing unit (CPU), a field programmable gate array (FPGA), a digital signal processor (DSP), an application specific integrated circuit (ASIC), a system on chip (SOC), or the like. The integrated circuit or the chip may be configured to execute an executable instruction (or code) to implement the foregoing method for activating or deactivating resources. Among them, the executable instruction may be stored in the integrated circuit or the chip, or may be obtained from another apparatus or device. For example, the integrated circuit or the chip includes a processor, a memory, and an interface configured to communicate with another apparatus. The executable instruction may be stored in the processor; and when the executable instruction is executed by the processor, the foregoing method for activating or deactivating is implemented. Alternatively, the integrated circuit or the chip may receive an executable instruction through the interface and transmit the executable instruction to the processor for execution, to implement the foregoing method for activating or deactivating.

In another example embodiment, there is further provided a computer program product including a computer program executable by a programmable apparatus, and the computer program has a code portion for performing the method for activating or deactivating resources described above when executed by the programmable apparatus.

In another example embodiment, there is further provided a chip, including a processor and an interface. The processor is configured to read an instruction to perform the foregoing method for activating or deactivating resources.

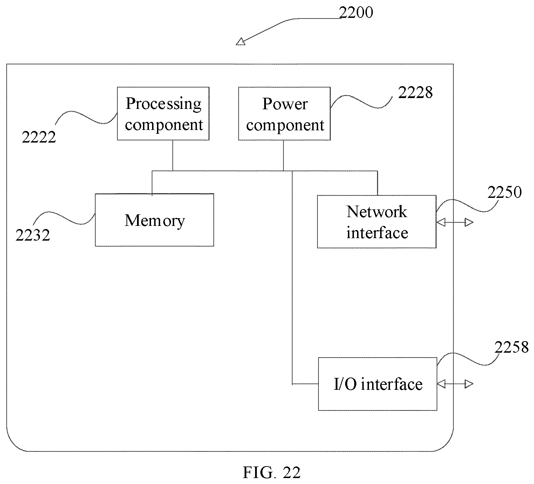

FIG. 22 is a block diagram of an apparatus for activating or deactivating shown according to an example embodiment. The resource release apparatus 2200 may be the base station shown in FIG. 1, or may be the LMF shown in FIG. 1. Referring to FIG. 22, the apparatus for activating or deactivating 2200 includes a processing component 2222 which further includes one or more processors, and memory resources represented by the memory 2232. The memory resources are used for storing instructions, such as applications, that may be executed by the processing component 2222. The application stored in the memory 2232 may include one or more modules each corresponding to a set of instructions. In addition, the processing component 2222 is configured to execute the instructions to perform the method for activating or deactivating.

The apparatus for activating or deactivating 2200 may further include a power component 2228 configured to perform power management of the apparatus for activating or deactivating 2200, a wired or wireless network interface 2250 configured to connect the apparatus for activating or deactivating 2200 to the network, and an input/output (I/O) interface 2258.

In an example embodiment, there is further provided a non-transitory computer-readable storage medium including instructions, such as the memory 2232 including instructions. The instructions may be executed by the processing component 2222 of the apparatus for activating or deactivating 2200 to complete the method for activating or deactivating. For example, the non-transitory computer-readable storage medium may be a ROM, a random access memory (RAM), a CD-ROM, a magnetic tape, a floppy disk, an optical data storage device, or the like.

Other embodiments of the present disclosure will be apparent to those skilled in the art from consideration of the description and practice of the present disclosure. The present application is intended to cover any variations, uses, or adaptations of the present disclosure following the general principles of the present disclosure and including common general knowledge and conventional technical means in the art not disclosed in the present disclosure. It is intended that the description and examples are considered as examples only, with a true scope and spirit of the present disclosure being indicated by the following claims.

It should be understood that the present disclosure is not limited to the precise structures that have been described above and shown in the accompanying drawings, and various modifications and changes may be made without departing from the scope of the present disclosure. It is intended that the scope of the present disclosure is only limited by the appended claims.

## Claims

1. A method for activating or deactivating an uplink positioning reference signal, applied to user equipment, and comprising: sending an activation request or a deactivation request for an uplink positioning reference signal to a base station, wherein the activation request or the deactivation request is used to request the base station to activate or deactivate the uplink positioning reference signal.

2. The method according to claim 1, wherein sending the activation request or the deactivation request for the uplink positioning reference signal to the base station comprises:
in a random access procedure of the user equipment, sending the activation request or the deactivation request for the uplink positioning reference signal to the base station by using preset signaling, wherein the preset signaling comprises at least one of RRC signaling and MAC signaling.

3. The method according to claim 1, wherein the activation request and the deactivation request comprise an identifier of the uplink positioning reference signal.

4. The method according to claim 1, wherein the activation request further comprises first activation time information, and the deactivation request further comprises first deactivation time information.

5. The method according to claim 4, wherein the first activation time information comprises at least one of:
a first activation start moment;
a first activation start moment and a first activation stop moment; or
a first activation start moment and a first activation duration.

6. The method according to claim 4, wherein the first deactivation time information comprises at least one of:
a first deactivation start moment;
a first deactivation start moment and a first deactivation stop moment; or
a first deactivation start moment and a first deactivation duration.

7. The method according to claim 1, further comprising:
receiving an activation command or a deactivation command sent by the base station based on the activation request or the deactivation request; and
sending or stopping sending the uplink positioning reference signal according to the activation command or the deactivation command.

8. The method according to claim 7, wherein the activation command comprises second activation time information, and the second activation time information comprises at least one of:
a second activation start moment;
a second activation start moment and a second activation stop moment; or
a second activation start moment and a second activation duration.

9. The method according to claim 7, wherein the deactivation command comprises second deactivation time information, and the second deactivation time information comprises at least one of:
a second deactivation start moment;
a second deactivation start moment and a second deactivation stop moment; or
a second deactivation start moment and a second deactivation duration.

10. The method according to claim 8, wherein sending the uplink positioning reference signal according to the activation command comprises:
sending the uplink positioning reference signal according to the second activation time information in the activation command.

11. The method according to claim 9, wherein stopping sending the uplink positioning reference signal according to the deactivation command comprises: stopping sending the uplink positioning reference signal according to the second deactivation time information in the deactivation command.

12. The method according to claim 1, further comprising:
receiving a failure indication message sent by the base station, wherein the failure indication message is used to indicate that the base station fails to activate the uplink positioning reference signal.

13. A method for activating or deactivating an uplink positioning reference signal, applied to a base station, and comprising:
receiving an activation request or a deactivation request for an uplink positioning reference signal sent by user equipment, wherein the activation request or the deactivation request is used to request the base station to activate or deactivate the uplink positioning reference signal.

14. The method according to claim 13, wherein the activation request comprises first activation time information, and the deactivation request comprises first deactivation time information.

15. The method according to claim 13, further comprising:
sending an activation command or a deactivation command to the user equipment according to the activation request or the deactivation request, wherein the activation command or the deactivation command is used to instruct the user equipment to send or stop sending the uplink positioning reference signal.

16. The method according to claim 14, wherein the activation command comprises second activation time information, and the deactivation command comprises second deactivation time information.

17. The method according to claim 13, further comprising:
in a case that the base station is unable to activate the uplink positioning reference signal, sending a failure indication message to the user equipment, wherein the failure indication message is used to indicate that the base station fails to activate the uplink positioning reference signal.

18. The method according to claim 15, further comprising:
sending attribute indication information of the uplink positioning reference signal to an LMF, wherein the attribute indication information comprises at least one of:
an identifier of the uplink positioning reference signal;
an activation state or a deactivation state of the uplink positioning reference signal; or
second activation time information or second deactivation time information.

19. The method according to claim 18, further comprising:
sending object indication information to the LMF, wherein the object indication information is used to indicate that the activation state or the deactivation state of the uplink positioning reference signal is determined according to the activation request or the deactivation request sent by the user equipment.

20. The method according to claim 19, wherein the attribute information and the object indication information are carried in an NRPPa message.

21. A method for activating or deactivating an uplink positioning reference signal, applied to an LMF, and comprising:
receiving attribute indication information of an uplink positioning reference signal sent by a base station, wherein the attribute indication information comprises an activation state or a deactivation state of the uplink positioning reference signal, and the activation state or the deactivation state is determined by the base station according to an activation request or a deactivation request sent by user equipment.

22. The method according to claim 21, wherein the attribute indication information further comprises at least one of:
an identifier of the uplink positioning reference signal; or
second activation time information or second deactivation time information.

23. The method according to claim 21, further comprising:
receiving object indication information sent by the base station, wherein the object indication information is used to indicate that the activation state or the deactivation state of the uplink positioning reference signal is determined according to the activation request or the deactivation request sent by the user equipment.

24. An apparatus for activating or deactivating an uplink positioning reference signal, applied in user equipment, and comprising:
a first sending module, configured to send an activation request or a deactivation request for an uplink positioning reference signal to a base station, wherein the activation request or the deactivation request is used to request the base station to activate or deactivate the uplink positioning reference signal.

25. An apparatus for activating or deactivating an uplink positioning reference signal, applied in a base station, and comprising:
a first receiving module, configured to receive an activation request or a deactivation request for an uplink positioning reference signal sent by user equipment, wherein the activation request or the deactivation request is used to request the base station to activate or deactivate the uplink positioning reference signal.

26. An apparatus for activating or deactivating an uplink positioning reference signal, applied in an LMF, and comprising:
a second receiving module, configured to receive attribute indication information of an uplink positioning reference signal sent by a base station, wherein the attribute indication information comprises an activation state or a deactivation state of the uplink positioning reference signal, and the activation state or the deactivation state is determined by the base station according to an activation request or a deactivation request sent by user equipment.

27. An apparatus for activating or deactivating an uplink positioning reference signal, comprising:
a processor; and
a memory, configured to store an instruction executable by the processor;
wherein the processor is configured to perform steps of the method according to any one of claims 1 to 12, or perform steps of the method according to any one of claims 13 to 20, or perform steps of the method according to any one of claims 21 to 23.

28. A computer-readable storage medium, wherein a computer program instruction is stored on the computer-readable storage medium; and, when the computer program instruction is executed by a processor, steps of the method according to any one of claims 1 to 12 are implemented, or steps of the method according to any one of claims 13 to 20 are implemented, or steps of the method according to any one of claims 21 to 23 are implemented.

29. A core network system, configured to perform the method according to any one of claims 21 to 23.

30. A core network system, comprising an LMF, wherein the LMF is configured to perform the method according to any one of claims 21 to 23.
